# EUROPEAN PATENT SPECIFICATION

(11) **EP 0 371 798 B1**
(45) Date of publication and mention of the grant of the patent: **22.02.1995**
(21) Application number: 89312481.8
(22) Date of filing: 30.11.1989
(51) Int. Cl.: G09G 3/30, H04N 3/12

(54) **Method and apparatus for driving display device**
Verfahren und Einrichtung zum Steuern eines Anzeigegeräts
Méthode et dispositif de commande d'un appareil d'affichage

(30) Priority: 30.11.1988 JP 304955/88
(43) Date of publication of application: 06.06.1990
(73) Proprietor: SHARP KABUSHIKI KAISHA, Osaka 545 (JP)
(72) Inventor: Ogawa, Ikuo, Nara-shi, Nara-ken (JP); Inohara, Akio, Asahi-ku Osaka (JP); Ohba, Toshihiro, Nara-shi, Nara-ken (JP); Kishishita, Hiroshi, Nara-shi, Nara-ken (JP); Uede, Hisashi, Wakayama-shi, Wakayama-ken (JP)
(74) Representative: Brown, Kenneth Richard

(56) References cited:
- GB-A- 2 186 730
- US-A- 4 366 504
- US-A- 4 554 539
- PATENT ABSTRACTS OF JAPAN vol. 9, no. 56 (E-302)12 March 1985 & JP-A-59 198 022

## Description

### 1. Field of the invention

The present invention relates to a method and an apparatus for driving a capacitive flat matrix display panel such as thin film EL display device and/or plasma display.

### 2. Description of the prior art

A double insulation type (or 3-layer structure) thin film EL element, for example, is formed in the following way.

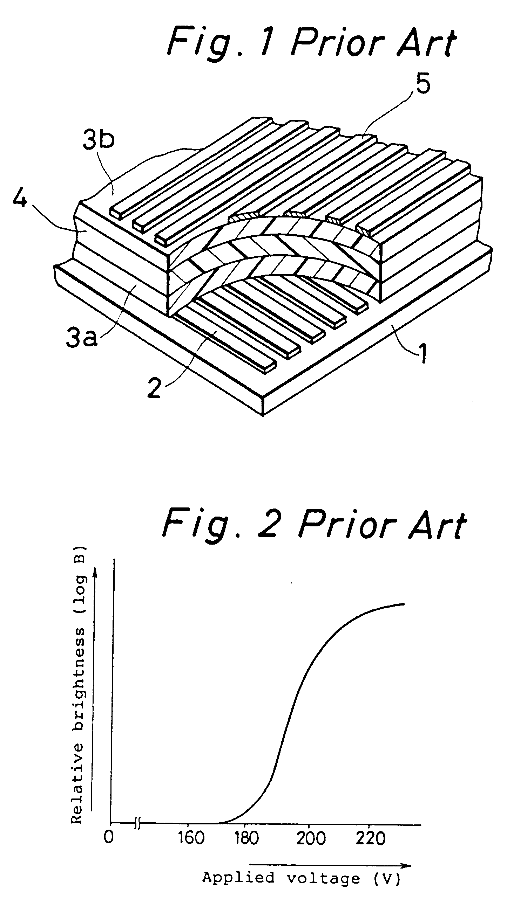

As shown in FIG. 1, strips of transparent electrodes 2 made of In₂O₃ are provided parallelly on a glass substrate 1. Over these transparent electrodes 2 are formed a layer of dielectric materials, 3a such as Y₂O₃, Si₃N₄ and Al₂O₃ and an layer of EL material 4, made of ZnS which is doped with an activation agent such as Mn, and a layer of dielectric material 3b such as Y₂O₃, Si₃N₄, TiO₂ and Al₂O₃ similarly to the above layer 3a, by means of thin film forming technique such as vacuum evaporation or sputtering to make a 3-layer structure each of thickness from 500 to 10000Å. Over this 3-layer structure is provided parallel strips of back electrodes 5 made of aluminum arranged at right angles to the transparent electrodes 2.

Because the thin film EL element is formed by interposing an EL material 4 which is sandwiched by dielectric material layers 3a and 3b between electrodes, it can be regarded as a capacitive element in terms of equivalent circuit. As is apparent from the voltage-brightness characteristic shown in FIG. 2, the thin film EL element is driven by applying a relatively high voltage of about 200V.

Basic display operation of a thin film EL display device which uses the thin film EL element as the display panel is driven, while using the transparent electrodes 2 of the thin film EL element as the data electrodes and using the back electrodes 5 as the scanning electrodes, by applying modulation voltage, corresponding to the display data which determines whether to illuminate or not, to the data electrodes and applying writing voltage to the scanning electrodes in the order of the lines. With this display drive method, superposition or cancellation between the writing voltage and the modulation voltage occurs in the part of picture elements of the EL layer where the scanning electrodes and the data electrodes intersect, resulting in a voltage higher than the luminescence threshold voltage or below the luminescence threshold voltage applied to the picture element, thereby making each picture element illuminate or not, respectively, to achieve the specified display pattern.

A popular method of driving such a thin film EL display device of the prior art, which is adopted to provide gradation display by changing the brightness of each picture element in multiple levels, is the pulse width modulation method where pulse duration of the modulation voltage applied to the data electrode is changed in accordance to the gradation display data (brightness data) thereby to control the area (intensity) of the voltage applied to the picture element.

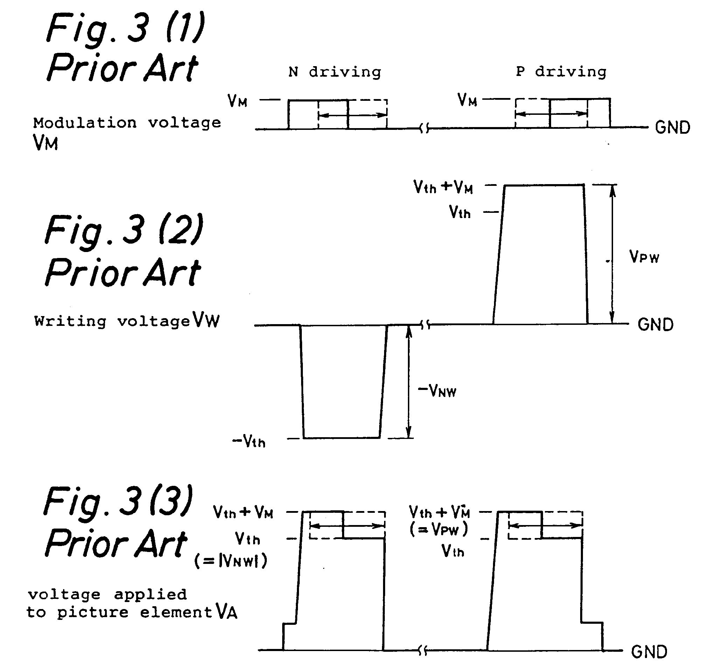

FIG. 3 (1), (2) and (3) show the waveforms of a modulation voltage V_{M} applied to the data electrode, a writing voltage V_{W} applied to the scanning electrode and a voltage V_{A} applied to the picture element in the pulse width modulation method.

In this case, symmetrical driving method as described below is generally adopted since it is capable of maintaining display quality of a thin film EL element which is driven with alternate current; symmetrical driving method completes one frame of display with a N-driven field which uses a voltage -V_{NW} having a level corresponding to the luminescence threshold voltage -Vₜₕ and of reverse polarity to the modulation voltage V_{M}, and a P-driven field which uses a writing voltage V_{PW} of a level, which corresponds to the sum (Vₜₕ + V_{M}) of the luminescence threshold voltage Vₜₕ and the modulation voltage V_{M}, and having the same polarity as the modulation voltage V_{M}.

Either with the N driving or with the P driving, voltage V_{A} which is applied to the data electrode is given as the difference of the potential V_{X} of the data electrode and the potential V_{Y} of the scanning electrode V_{X} - V_{Y}. In the N driving, voltage V_{A} of a waveform, which is the modulation voltage V_{M} superposed on the absolute value V_{NW} of the writing voltage -V_{NW}, is applied to the picture element as shown in FIG. 3 (3), therefore the voltage beyond the luminescence threshold voltage Vₜₕ is applied in the section where the modulation voltage V_{M} and the writing voltage V_{PW} are superposed. That is, area (intensity) of the voltage V_{A} applied to the picture element in the N driving increases as the pulse duration of the modulation voltage V_{M} elongates, and decreases as the pulse duration becomes shorter, as shown by the dashed lines in FIG. 3 (1) and (2).

On the other hand, in the P driving, voltage V_{A} of a waveform which is the writing voltage V_{PW} subtracted by the modulation voltage V_{M} is applied to the picture element. Therefore a voltage beyond the luminescence threshold voltage Vₜₕ is applied in the section where the modulation voltage V_{M} and the writing voltage V_{PW} are not superposed. That is, in P driving, the area (intensity) of the voltage V_{A} applied to the picture element increases as the pulse duration of the modulation voltage V_{M} becomes shorter, as shown by the dashed lines in FIG. 3 (1) and (2).

As described above, either in the N driving or the P driving, gradation display is performed by variably setting the pulse duration of the modulation voltage V_{M} in accordance to the gradation to be displayed (voltage changes in opposite senses in N driving and P driving).

However, the above driving method has been suffering a problem of unstable gradation brightness and being unable to set much gradation levels, as described in the following.

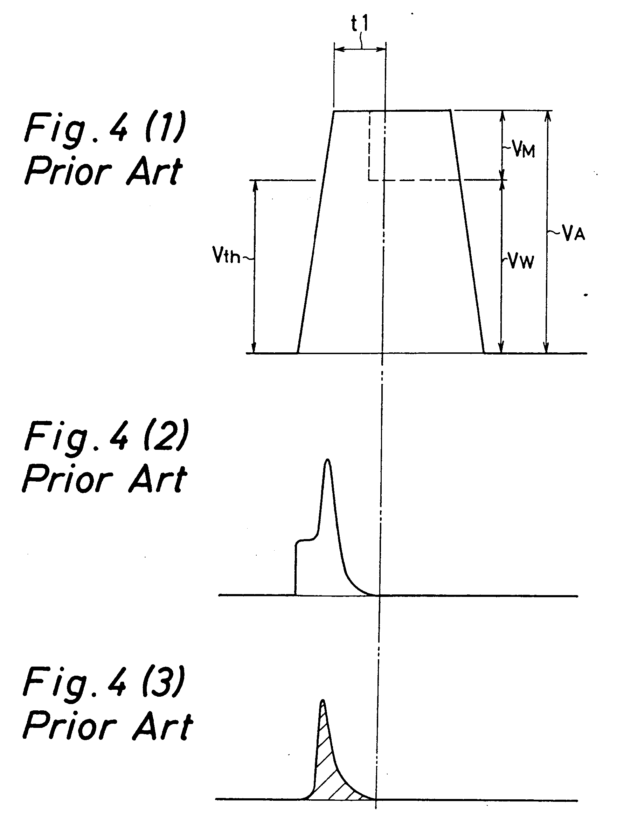

FIG. 4 (1), (2) and (3) show, for the purpose of explaining the cause of the problem, the voltage waveform applied to the picture element, waveform of the accompanying current of the power source and the waveform of current flowing through the luminescent layer of the picture element, respectively, in the conventional pulse width modulation method.

Voltage V_{A} shown in FIG. 4 (1) corresponds to the waveform shown in FIG. 3 (3). When Voltage V_{A} of square waveform is applied to the picture element, current of the power source takes the waveform as shown in FIG. 4 (2).

That is, the current flowing before the Voltage V_{A} reaches the luminescence threshold voltage Vₜₕ is a nearly constant current which flows through the capacitive component of the picture element and does not contribute to the luminescence. When the Voltage V_{A} reaches the luminescence threshold voltage Vₜₕ, current component which flows through the luminescent layer of the picture element, or the current component which contributes to the luminescence, is added to that flowing through the capacitive component of the picture element, resulting in the current flowing through the luminescent layer as shown in FIG. 4 (3). Illumination brightness of the picture element increases in proportion to the current flowing through the luminescent layer.

When the pulse duration of the modulation voltage V_{M} is limited as shown by the dashed line in FIG. 4 (1), the current flowing through the luminescent layer is shut off when the modulation voltage V_{M} drops. Thus the current flowing through the luminescent layer of the picture element is controlled by controlling the pulse duration of the modulation voltage V_{M}, and a brightness corresponding to the pulse duration of the modulation voltage V_{M} can be obtained.

However, as described above, in case the writing voltages -V_{NW} and V_{PW} are applied to the picture element in square waveforms, current flowing through the luminescent layer takes a peaked shape as shown in FIG. 4 (3). This leads to a shorter energization period (denoted by t1 in FIG. 4(1)) and makes it impossible to set the modulation voltage V_{M} in multiple levels and to control the brightness in multiple levels. In addition, because larger current flows through the luminescent layer in each brightness level, a slight deviation in the pulse duration of the modulation voltage V_{M} causes a significant variation in the brightness, making it difficult to stabilize the brightness gradation.

The document US-A-4 554 539 discloses a driver circuit for an electroluminescent display in which a ramped voltage is supplied by a row driver.

The present invention seeks to provide a method and apparatus for driving a display device, such as thin film EL display device, which are capable of displaying in multiple gradation levels and displaying the gradation of each level stably.

The invention provides a method of driving a display device including a dielectric layer interposed between a plurality of scanning electrodes and a plurality of data electrodes arranged to intersect the scanning electrodes, comprising the steps of applying a modulation voltage, having a variable pulse width according to gradation display data, to each of the data electrodes; and applying a writing voltage, including a ramp voltage, in a line sequential order to the scanning electrodes; characterised in that the absolute value of the ramp voltage increases with time.

The time variation rate of the ramp voltage may be predetermined and therefore the ramp voltage may change in proportion to time.

Further, the invention provides an apparatus for driving a display device including a display apparatus having a dielectric layer interposed between a plurality of scanning electrodes and a plurality of data electrodes which are arranged to intersect the scanning electrodes, said apparatus comprising: a data elec-trode drive circuit for applying a modulation voltage having a variable pulse width according to gradation display data to the data electrode, and a scanning electrode drive circuit for applying a writing voltage including a ramp voltage to the scanning electrodes in line sequential order; characterised in that the absolute value of the ramp voltage increases with time.

Furthermore the variation rate of the ramped writing voltage with time may be predetermined and therefore the ramp voltage may change in proportion to time. Furthermore, the scanning electrode drive circuit may comprise a constant voltage generator circuit for generating a voltage which is maintained at a constant level during the scanning period, and a ramp voltage generator circuit for generating a part of the ramp voltage which is added to the constant voltage and increases with time during the scanning period.

Further, the ramp voltage generator may comprise a capacitor connected in series to the outputs of the constant voltage generators, a voltage-current converter circuit connected in series to the capacitor for controlling charging current of the capacitor which corresponds to the input voltage; and a ramp voltage control circuit for supplying the voltage-current converter circuit with a voltage which increases at a constant rate with time.

Further, the invention may provide a driving apparatus for a display device where one frame consists of a pair of fields and voltages applied to the dielectric layer are of opposite polarities in one field and in another field.

Because the ramp voltage is applied to the scanning electrodes as the writing voltage, the peak value of the current which flows through the luminescent layer of the picture element and contributes to the luminescence is suppressed to a low level and the energization period of the current is elongated, thereby enabling to set the pulse duration of the modulation voltage at a plurality of levels. The current flowing through the luminescent layer at each level of brightness is reduced in order to stabilize the gradation of each brightness level.

Because the driving method of the invention for a display device applies the ramp voltage to the scanning electrodes as the writing voltage, peak value of the current which flows though the luminescent layer of the picture element and contributes to the luminescence is suppressed to a low level and the energization period of the current is elongated, thereby enabling to set the pulse duration of the modulation voltage at a plurality of levels and to stabilize the gradation display of each brightness level.

These features and advantages of the invention will be more apparent from the detailed explanations given in the following and the drawings.
FIG. 1 is a perspective view, partly broken away, of a thin film EL element;
FIG. 2 is a graph illustrative of the applied voltage-brightness characteristic of the thin film EL element;
FIG. 3 (1), (2) and (3) show the waveforms of a modulation voltage, a writing voltage and a voltage applied to picture elements in the case of the driving method of the prior art, respectively;
FIG. 4 (1), (2) and (3) show the waveforms of the voltage applied to the picture elements, power current and current which flows through the luminescent layer of the picture elements in the case of the conventional driving method, respectively;
FIG. 5 is a block diagram showing the schematic constitution of a thin film EL display device to which a driving method which is an embodiment of the invention is applied;
FIG. 6 is a block diagram showing the schematic constitution of a ramp voltage generator circuit 21a which is used in P driving of the thin film EL display device;
FIG. 7 is a circuit diagram showing the specific constitution of the ramp voltage generator circuit 21a;
FIG. 8 is a block diagram showing the schematic constitution of a ramp voltage generator circuit 21b used in N driving of the thin film EL display device;
FIG. 9 is a circuit diagram showing the specific constitution of the ramp voltage generator circuit 21b;
FIG. 10 (1), (2) and (3) show the waveforms of a modulation voltage V_{M}, a writing voltage V_{PW} and a voltage V_{A} applied to the picture elements, respectively, in the P driving;
FIG. 11 (1), (2) and (3) show the waveforms of a modulation voltage V_{M}, a writing voltage -V_{NW} and a voltage V_{A} applied to picture elements, respectively, in the N driving, and
FIG. 12 (1), (2) and (3) show the waveforms of a voltage applied to the picture elements, a power current and a current which flows through the luminescent layer of the picture elements, respectively.

A preferred embodiment of the invention will be explained in detail in the following referring to the drawings.

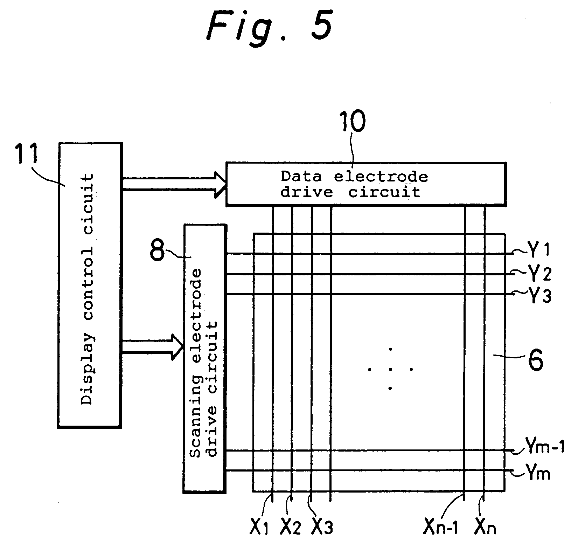

FIG. 5 is a block diagram showing the schematic constitution of the thin film EL display device to which the driving method which is an embodiment of the invention is applied. In this figure, the display device 6 comprises a thin film EL element and, since the specific constitution thereof is the same as that explained in the description of the prior art, explanation thereof is omitted here.

Scanning electrodes Y1, Y2, ..., Ym (arbitrary scanning electrode will be denoted by a symbol Y hereafter) of the display device 6 are connected to a scanning electrode driving circuit 8 and, on the other hand, data electrodes X1, X2, ..., Xm (arbitrary data electrode will be denoted by a symbol X hereafter) of the display device 6 are connected to a data electrode driving circuit 10. To the scanning electrode drive circuit 8 and the data electrode drive circuit 10 are connected a display control circuit 11 which controls these circuits. The data electrode drive circuit 10 has a function of variably setting the pulse duration of a modulation voltage V_{M} applied to each data electrode X in accordance to the gradation display data which is sent from the display control circuit 11.

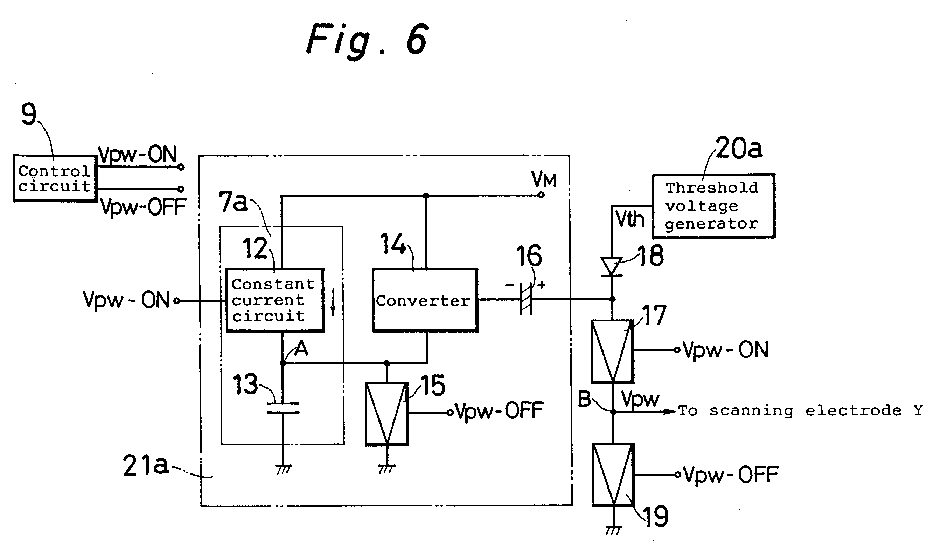

FIG. 6 is a block diagram showing the schematic constitution of the ramp voltage generator circuit 21a which supplies the ramp voltage to the output stage of the scanning electrode drive circuit 8 as a writing voltage V_{PW}. In other words, the ramp voltage generator circuit 21a is a circuit used in the P driving where the writing voltage V_{PW} of the same polarity as that of the modulation voltage V_{M} is applied to the scanning electrode Y. In FIG. 6, the constant current circuit 12 supplies a constant current upon receipt of a writing start signal V_{PW}-ON from a control circuit 9 of the scanning electrode drive circuit 8, and is connected to a power source V_{M} and to one terminal of a capacitor 13, while another terminal of the capacitor is grounded. The ramp voltage control circuit 7a comprises the constant current circuit 12 and the capacitor 13.

A converter 14 supplies, upon receipt of the charging voltage (potential at connecting point A of the constant current circuit 12 and the capacitor 13) of the capacitor 13, a voltage output corresponding to the potential, and is connected to the power source V_{M} and to the connecting point A. Also connected between the connecting point A and the ground is a switch 15 which clamps the potential at the connecting point A to the ground, upon receipt of a writing end signal V_{PW}-OFF sent from the control circuit 9 of the scanning electrode drive circuit 8.

An output terminal of the converter 14 is connected to one terminal of a switch 17 via a capacitor 16, and the terminal of the switch 17 is connected to a threshold voltage generator circuit 20a via a diode 18. The switch 17 has a function of supplying a voltage (Vₜₕ + V_{R}), which is generated by synthesizing the luminescence threshold voltage Vₜₕ and the output voltage V_{R} of the converter 14, as the writing voltage V_{PW} to the another terminal upon receipt of the writing start signal V_{PW}-ON.

To the another terminal of the switch 17 is connected one terminal of another switch 19 of which another terminal is grounded. The switch 19 which clamps the potential at the connecting point B of the switch 17 and the switch 19 to the ground, upon receipt of the writing end signal V_{PW}-OFF. The point B is connected to a power line which supplies drive power to the scanning electrode Y of the last stage of the scanning electrode drive circuit 8.

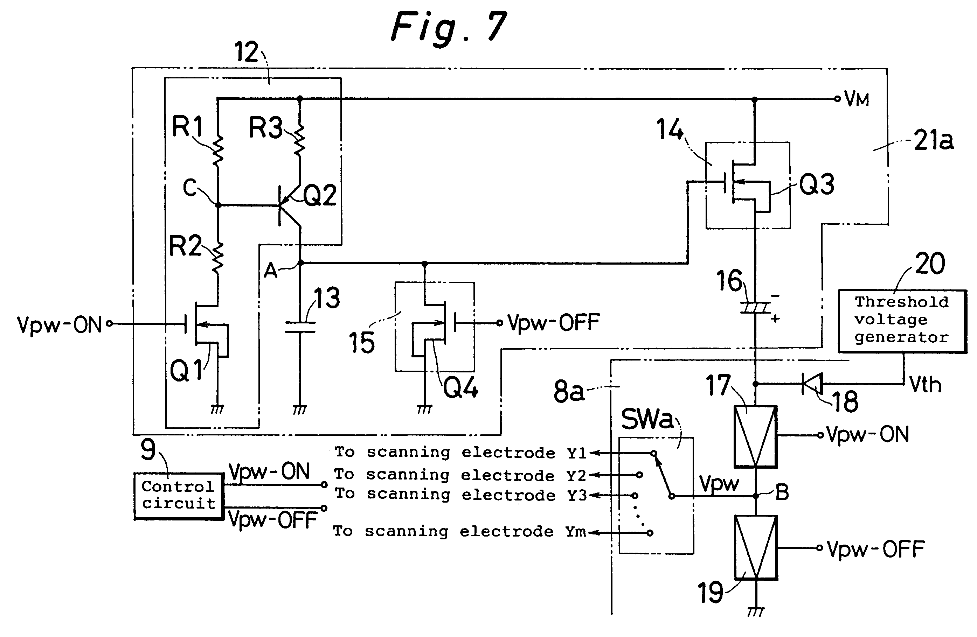

FIG. 7 is a circuit diagram showing an example of the specific constitution of the ramp voltage generator circuit 21a shown in FIG. 6. In FIG. 7, the constant current circuit 12 comprises resistors R1, R2 and R3, N channel type MOS transistor Q1 and a PNP transistor Q2.

Resistors R1 and R2 are connected serially, with one lead of the resistor R1 connected to the power source V_{M} and another lead of the resistor R2 connected to the drain of the N channel type MOS transistor Q1. The source of the transistor Q1 is grounded, and a highlevel voltage is fed to the gate of the transistor Q1 as the writing start signal V_{PW}-ON. To a connecting point C of the resistors R1 and R2 is connected the base of the PNP transistor Q2 of which emitter is connected to the power source V_{M}, via the resistor R3. The collector of the transistor Q2 is connected to one terminal of the capacitor 13.

The converter 14 is composed of a N channel MOS transistor Q3 of which gate is connected to the connecting point A of the capacitor 13 and the transistor Q2. The drain of the transistor Q3 is connected to the power source V_{M} and the source of the transistor Q3 is connected to one terminal of the capacitor 16.

The transistor Q3 is assumed to have a sufficient capacity of current supply and its source voltage to be not affected by the output load of the scanning electrode drive circuit 8. The switch 15 is also composed of a N channel type MOS transistor Q4. The drain of the transistor Q4 is connected to the connecting point A, its source is grounded and its gate is fed with a high level voltage as the writing end signal V_{PW}-OFF.

Another terminal of the capacitor 16 is connected to a high voltage line 8a of the scanning electrode drive circuit 8 which comprises a power source Vₜₕ, a diode 18, the switches 17 and 19, etc. The switches 17 and 19 are composed of known circuits consisting of a high withstanding voltage MOS transistor and other components. To the connecting point B is connected a switch SWa, and by switching the switch SWa, the writing voltage V_{PW} is applied to the scanning electrodes Y1 through Ym in the order of the lines.

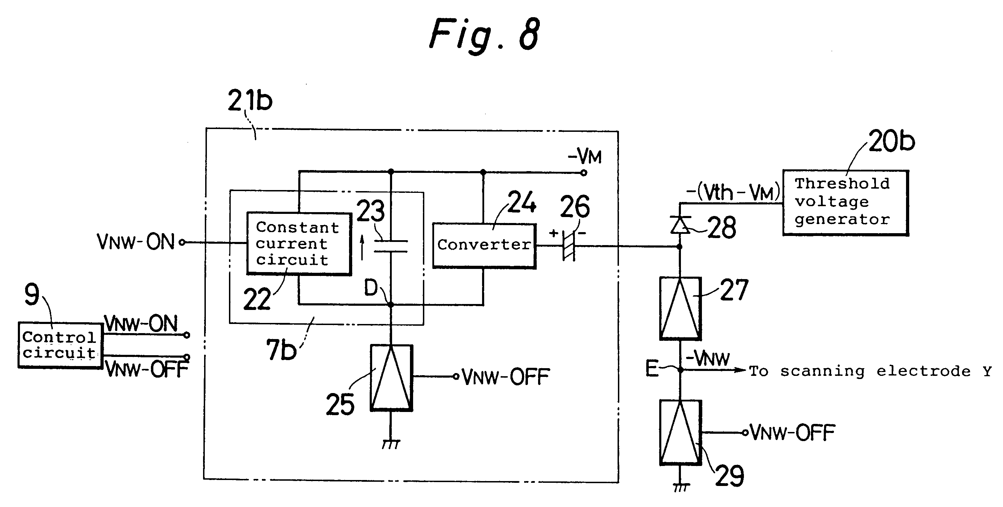

FIG. 8 is a block diagram showing the schematic constitution of another ramp voltage generator circuit 21b which supplies a ramp voltage to the output stage of the scanning electrode drive circuit 8 as a writing voltage -V_{NW}. In other words, the ramp voltage generator circuit 21b is a circuit used in the N driving where the writing voltage -V_{NW} of the reverse polarity to that of the modulation voltage V_{M} is applied to the scanning electrode Y. In FIG. 8, a constant current circuit 22 supplies a constant current upon receipt of a writing start signal V_{NW}-ON from the control circuit 9 of the scanning electrode drive circuit 8, and is connected to a power source -V_{M}. And a capacitor 23 is connected in parallel with the constant current circuit 22. The ramp voltage control circuit 7b comprises the constant current circuit 22 and the capacitor 23.

A converter 24 supplies, upon receipt of the charging voltage (potential at connecting point D of the constant current circuit 22 and the capacitor 23) of the capacitor 23, a voltage V_{R} corresponding to the potential, and is connected to the power source -V_{M} and to the connecting point D. Also connected between the connecting point D and the ground is a switch 25 which clamps the potential at the connecting point D to the ground, upon receipt of a writing end signal V_{NW}-OFF sent from the control circuit 9 of the scanning electrode drive output 8.

Further an output terminal of the converter 24 is connected to one terminal of a switch 27 via a capacitor 26, and the terminal of the switch 27 is connected to a threshold voltage generator circuit 20b (a power source which supplies a voltage of negative polarity with the differential voltage of the luminescence threshold voltage and the modulation voltage) via a diode 28. The switch 27 has a function of supplying a voltage -(Vₜₕ - V_{M}) + V_{R}, which is generated by synthesizing the output voltage V_{R} of the converter 24 and the output voltage of the threshold voltage generator circuit 20b, as the writing voltage -V_{NW} to the another terminal upon receipt of the writing start signal V_{NW}-ON.

To the another terminal of the switch 27 is connected one terminal of another switch 29 of which another terminal is grounded. The switch 29 has a function of clamping the potential at a connecting point E of the switch 27 and the switch 29 to the ground, upon receipt of the writing end signal V_{NW}-OFF. The point E is connected to a power line which supplies drive power to the scanning electrode Y of the last stage of the scanning electrode drive circuit 8.

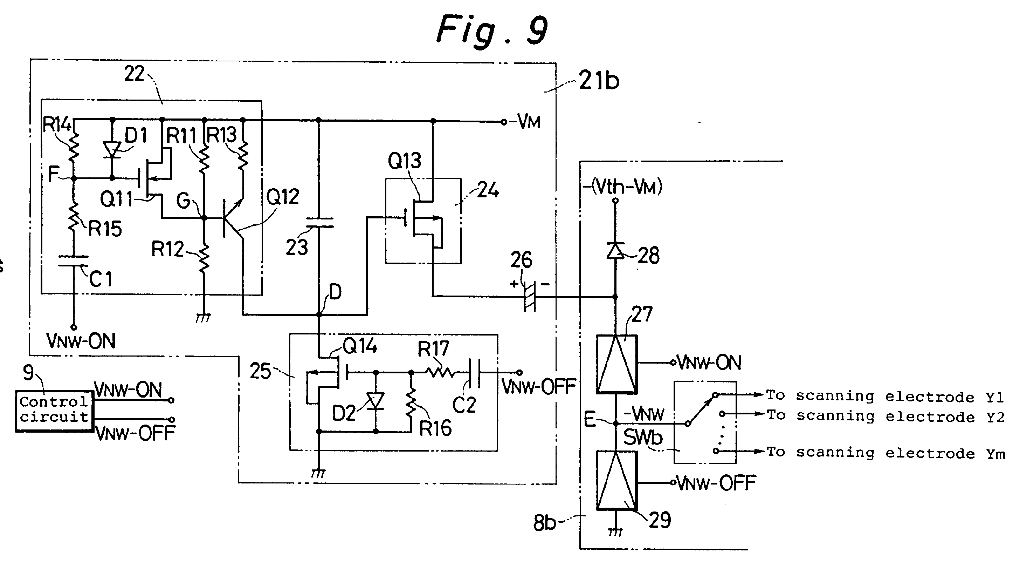

FIG. 9 is a circuit diagram showing an example of the specific constitution of the ramp voltage generator circuit 21b shown in FIG. 8. In FIG. 9, the constant current circuit 22 comprises resistors R11, R12, R13, R14 and R15, a diode D1, a capacitor C1, a N channel type MOS transistor Q11 and a NPN transistor Q12.

Resistors R14 and R15 are connected serially, with one lead of the resistor R14 connected to the power source -V_{M} and another lead of the resistor R15 connected to one terminal of the capacitor C1. A high level voltage is fed to another terminal of the capacitor C1 as the writing start signal V_{NW}-ON. The diode D1 is connected in parallel with the resistor R14. A connecting point F of the resistors R14 and R15 is connected to the gate of the N channel type MOS transistor Q11 of which source is connected to the power source -V_{M}.

The resistors R11 and R12 are connected serially between the power source -V_{M} and the ground, and to the connecting point G of the resistors R11 and R12 is connected the drain of the transistor Q11. To the connecting point G is also connected the base of the NPN transistor Q12, and the emitter of the transistor Q12 is connected to the power source -V_{M} via the resistor R13. The collector of the transistor Q12 is connected to one terminal of the capacitor 23.

The converter 24 is composed of a P channel MOS transistor Q13 of which gate is connected to the connecting point D of the capacitor 23 and the transistor Q12. The drain of the transistor Q13 is connected to the power source -V_{M}, and the source of the transistor Q13 is connected to one terminal of the capacitor 26. The transistor Q13 is assumed to have a sufficient capacity of supplying current and its source voltage to be not affected by the output load of the scanning electrode drive circuit 8.

The switch 25 is composed of a P channel type MOS transistor Q14, resistors 16 and 17, a diode D2 and a capacitor C2.

The source of the P channel type MOS transistor Q14 is grounded, its drain is connected to the connecting point D, and between the source and the gate are connected the diode D2 and the resistor R16. The gate of the transistor Q14 is connected to one terminal of the capacitor C2, and another terminal of the capacitor C2 is fed with a low level voltage as the writing end signal V_{NW}-OFF.

Another terminal of the capacitor 26 is connected to a high voltage line 8b of the scanning electrode drive circuit 8 which comprises a power source -(Vₜₕ - V_{M}), a diode 28, switches 27 and 29, etc. The switches 27 and 29 of the high voltage line are composed of known circuits consisting of a high withstanding voltage MOS transistor and other components. To the connecting point E is connected a switch SWb, and by switching the switch SWb, the writing voltage -V_{NW} is applied to the scanning electrodes Y1 through Ym in the order of the lines.

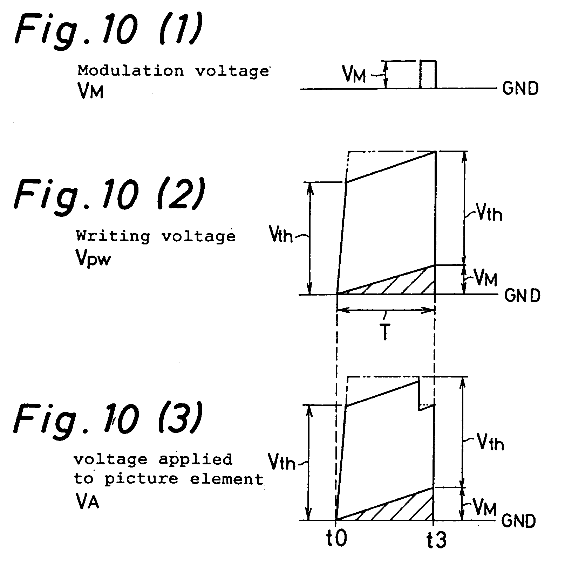

FIG. 10 (1), (2) and (3) show the waveforms of the modulation voltage V_{M} which is applied to the data electrode X, writing voltage V_{PW} which is applied to the scanning electrode Y and the voltage V_{A} which is applied to the picture elements, respectively, in the case of P driving which uses the writing voltage V_{PW} obtained by the ramp voltage generator circuit 21a shown in FIG. 6 and FIG. 7, among the gradation display drive operations of the thin film EL display device.

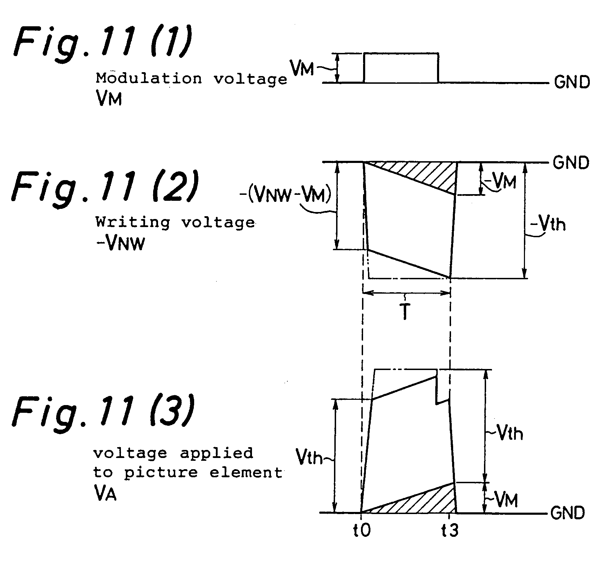

FIG. 11 (1), (2) and (3) show the waveforms of the modulation voltage V_{M}, writing voltage -V_{NW} and the voltage V_{A}, respectively, in the case of N driving which uses the writing voltage -V_{NW} obtained by the ramp voltage generator circuit 21b shown in FIG. 8 and FIG. 9. With reference to these waveforms, the operation of driving the gradation display is explained in the following in the cases of the P driving and the N driving, individually.

### P driving

In case the gate of the transistor Q1 and the switch 17 of the ramp voltage generator circuit 21a shown in FIG. 7 are supplied with high level voltage as the writing start signal V_{PW}-ON at time t0, the switch 17 is switched on to apply the luminescence threshold voltage Vth to the scanning electrode Y and, at the same time, to turn on the transistor Q1, resulting in a drop of the base potential of the transistor Q2 turning on the transistor Q2. This causes a constant current to start to flow through the resistor R3 and the transistor Q2 from the power source V_{M} into the capacitor C13.

Charging voltage of the capacitor 13 increases at a constant rate with time from the ground potential to the potential V_{M}. Consequently, in the transistor Q3 which receives the charging voltage as the gate signal, its output or the source voltage increases in proportion to the charging voltage. That is, output of the transistor Q3 becomes the ramp voltage V_{R} which increases at a constant rate with time. The ramp voltage V_{R} is stored in the capacitor 16 and is added to the voltage of the power source Vth, to be applied to the scanning electrode Y as the writing voltage V_{PW} of the waveform shown in FIG. 10 (2). In the waveform shown in FIG. 10 (2), the shaded part represents the voltage component borne by the ramp voltage V_{R}, and the dashed line shows the profile of the waveform of the writing voltage V_{PW} in the case of prior art which does not use the ramp voltage generator circuit 21a.

When a certain period of time T has lapsed (time t3), the writing start signal V_{PW}-ON turns to the low level and the transistors Q1 and Q2 turn off, to apply a high level voltage as the writing end signal V_{PW}-OFF to the gate of the transistor Q4 of the ramp voltage generator circuit shown in FIG. 7. This causes the capacitor 13 to discharge, resulting in rapid drop of the charging voltage of the capacitor 13 and, accordingly, drop of the ramp voltage VR. In this way, the scanning electrode drive circuit 8 applies the writing voltage V_{PW} of a ramp waveform with pulse duration T as shown in FIG. 10 (2) to the scanning electrode Y.

To the data electrode X, on the other hand, modulation voltage V_{M} of square wave with pulse duration corresponding to the gradation brightness to be displayed as shown by the solid line in FIG. 10 (1) is applied by the data electrode drive circuit 10.

As a result, voltage V_{A} applied to the corresponding picture element takes the waveform of the writing voltage V_{PW} of FIG. 10 (2) minus modulation voltage V_{M} of FIG. 10 (1) as shown by the solid line in FIG. 10 (3).

### N driving

In case the capacitor C1 and the switch 27 of the ramp voltage generator circuit 21b shown in FIG. 9 are supplied with high level voltage as the writing start signal V_{NW}-ON at time t0, the switch 27 is switched on to apply voltage - (Vth -VM) to the scanning electrode Y and, at the same time, to turn on the transistor Q11 and turn on the transistor Q12, to thereby lower the potential of the connecting point D which has been at the ground potential in the previous cycle. This causes a constant current to start to flow from the capacitor 23 into the power source -V_{M}, through transistor Q12 and the resistor R13.

Charging voltage of the capacitor 23 decreases at a constant rate with time from the ground potential to a potential -V_{M}. Consequently, in the transistor Q13 which receives the charging voltage as the gate signal, its output or the source voltage decreases in proportion to the charging voltage. That is, the output of the transistor Q13 becomes the ramp voltage V_{R} which decreases at a constant rate with time.

The ramp voltage V_{R} is added to the voltage of the power source -(Vth -VM) through the capacitor 26, to be applied to the scanning electrode Y as the writing voltage -V_{NW} of the waveform shown in FIG. 11 (2). In the waveforms shown in FIG. 11 (2), the shaded part represents the voltage component borne by the ramp voltage V_{R}, and the dashed line shows the profile of the waveform of the writing voltage -V_{NW} in the case of the prior art which does not use the ramp voltage generator circuit 21b.

When a certain period of time T has lapsed (time t3), the writing start signal V_{NW}-ON turns to the low level and the transistors Q11 and Q12 turn off, to apply a low level voltage as the writing end signal V_{NW}-OFF to the capacitor C2 of the ramp voltage generator circuit 21b shown in FIG. 9. This turns on the transistor Q14 and causes the capacitor 23 to be charged, resulting in rapid rise of the potential of the connecting point D and, accordingly, rise of the ramp voltage V_{R}. In this way, the scanning electrode drive circuit 8 applies the writing voltage -V_{NW} of a ramp waveform with pulse duration T as shown in FIG. 11 (2) to the scanning electrode Y.

To the data electrode X, on the other hand, modulation voltage V_{M} of square wave with pulse duration corresponding to the gradation brightness to be displayed as shown by the solid line in FIG. 11 (1) is applied by the data electrode drive circuit 10.

As a result, voltage V_{A} applied to the corresponding picture element takes the waveform of absolute value of the writing voltage -V_{NW} of FIG. 11 (2) minus modulation.voltage V_{M} of FIG. 11 (1) as shown by the solid line in FIG. 11 (3).

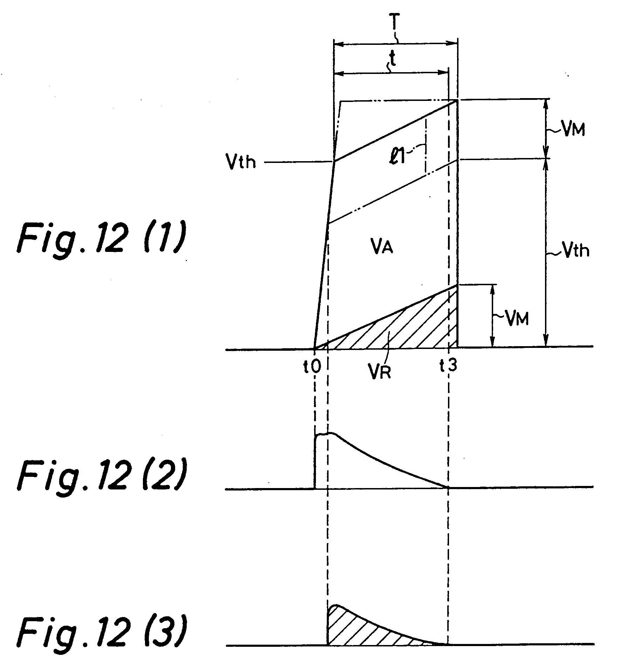

FIG. 12 (1), (2) and (3) shows the waveforms of the voltage applied to the picture element (corresponding to the waveform of FIG. 10 (3)), power current at this time and the current flowing through the luminescent layer of the picture element, respectively.

The power current waveform at this time has a longer energization period after the voltage V_{A} exceeded the luminescence threshold voltage Vth as shown in FIG. 12 (2). That is, the voltage V_{A} does not show a square waveform but shows a waveform obtained by synthesizing the modulation voltage V_{M} of a square wave and the writing voltage V_{PW} of a ramp waveform, and therefore the power current does not take a peaked shape but dampens gradually.

This tendency is directly reflected on the current flowing the luminescent layer of the picture element and, consequently, the current waveform has a peak which is suppressed to a low level and gradually dampens resulting in longer energization period as shown in FIG. 12 (3).

On the other hand, gradation display is performed by setting the pulse duration of the modulation voltage V_{M} short in multiple levels as shown by the alternate long/short dash line ℓ1 in FIG. 12 (1), thereby shortening the energization period of the current flowing through the luminescent layer of the picture element shown in FIG. 12 (2). In this case, since the energization period of the current flowing through the luminescent layer of the picture element is longer than that in the prior art, the range where the pulse duration of the modulation voltage V_{M} can be variably set, namely the effective region indicated by symbol t in FIG. 12 (1) is broadened, enabling easy gradation display in multiple levels.

Further, because the peak of the current flowing through the luminescent layer of the picture element is suppressed to a low level, the current for the brightness of each gradation is also reduced, thereby the brightness is prevented from fluctuating greatly due to deviation of the pulse duration of the modulation voltage V_{M}, making it possible to display stable gradation of each gradation.

The features described above which are enabled by using the writing voltage V_{PW} of ramp waveform are similar also in the case of N driving.

While the above embodiment is explained for the case of driving a thin film EL display device, the spirit of the invention is not limited to this particular application, but can be applied to driving of other capacitive display devices such as plasma display.

The invention may be embodied in other specific forms without departing from the essential characteristics thereof. The present embodiments are therefore to be considered in all respects as illustrative and not restrictive, the scope of the invention being indicated by the appended claims rather than by the foregoing description and all changes which come within the meaning of the claims are therefore intended to be embraced therein.

## Claims

1. A method of driving a display device including a dielectric layer interposed between a plurality of scanning electrodes (Y) and a plurality of data electrodes (X) arranged to intersect the scanning electrodes, comprising the steps of applying a modulation voltage (V_{M}), having a variable pulse width according to gradation display data, to each of the data electrodes (X); and
applying a writing voltage (V_{PW,} -V_{NW}), including a ramp voltage (V_{R}), in a line sequential order to the scanning electrodes (Y);
characterised in that the absolute value of the ramp voltage increases with time.

2. A method for driving a display device as claimed in claim 1, wherein the time variation rate of the ramp voltage (V_{R}) is constant such that the ramp voltage (V_{R}) changes in proportion to time.

3. An apparatus for driving a display device including a display apparatus (6) having a dielectric layer interposed between a plurality of scanning electrodes (Y) and a plurality of data electrodes (X) arranged to intersect the scanning electrodes, said apparatus comprising:
a data electrode drive circuit (10) for applying a modulation voltage (V_{M}) having a variable pulse width according to gradation display data to the data electrode (X), and
a scanning electrode drive circuit (8) for applying a writing voltage (V_{PW}, -V_{NW}) including a ramp voltage (V_{R}) to the scanning electrodes (Y) in line sequential order;
characterised in that the absolute value of the ramp voltage increases with time.

4. A driving apparatus for a display device as claimed in claim 3 wherein the time variation rate of the ramp voltage (V_{R}) is constant such that the ramp voltage (V_{R}) changes in proportion to time.

5. A driving apparatus for a display device as claimed in claim 3 or 4, wherein the scanning electrode drive circuit (8) comprises:
a constant voltage generator circuit (20a; 20b) for generating a voltage (Vₜₕ; -Vₜₕ + V_{M}) which is maintained at a constant level during the scanning period, and a
ramp voltage generator circuit (21a; 21b) for generating a part of the ramp voltage (VR) which is added to the constant voltage (Vₜₕ; -Vₜₕ + V_{M}) and increases with time during the scanning period.

6. Apparatus as claimed in claim 5, wherein the constant voltage generator circuit (20a) is arranged to generate a threshold voltage (Vₜₕ) of the dielectric layer.

7. Apparatus as claimed in claim 5, wherein the constant voltage generator circuit (20b) is arranged to generate the sum of a threshold voltage (Vₜₕ) of the dielectric layer and the magnitude of the modulation voltage (V_{M}).

8. A driving apparatus for a display device as claimed in any one of claims 5, 6 or 7, wherein the ramp voltage generator circuit (21a; 21b) comprises:
a capacitor (16; 26) connected in series to the outputs of the constant voltage generators (20a; 20b),
a voltage-current converter circuit (14; 24) connected in series to the capacitor (16; 26) for controlling charging current of the capacitor (16; 26) which corresponds to the input voltage; and
a ramp voltage control circuit (7a; 7b) for supplying the voltage-current converter circuit (14, 24) with a voltage which increases at a constant rate with time.

9. A driving apparatus for a display device as claimed in any one of claims 3 to 8, wherein one frame consists of a pair of fields and the voltages applied to the dielectric layer are of opposite polarities in one field and in another field.

## Patentansprüche

1. Verfahren zum Steuern eines Anzeigegeräts mit einer dielektrischen, zwischen mehreren Abtastelektroden (Y) und mehreren, die Abtastelektroden überkreuzenden Dataelektroden (X) angebrachten Schicht, welches folgende Schritte aufweist:
Anlegen einer Modulationsspannung (V_{M}) mit einer variablen Impulsdauer an jede der Dataelektroden (X) entsprechend der Gradationsanzeigedaten; und
Anlegen einer eine Sägezahnspannung (V_{R}) beinhaltenden Schreibspannung (V_{PW}, -V_{NW}) an die Abtastelektroden (Y) in einer sequentiellen Zeilenfolge;
**dadurch gekennzeichnet**, daß der absolute Wert der Sägezahnspannung zeitabhängig zunimmt.

2. Verfahren zum Steuern eines Anzeigegeräts nach Anspruch 1, wobei die zeitabhängige Veränderung der Sägezahnspannung (V_{R}) konstant ist, so daß sich die Sägezahnspannung proportional zur Zeit verändert.

3. Vorrichtung zum Steuern eines Anzeigegeräts, welches eine Anzeigevorrichtung (6) mit einer zwischen mehreren Abtastelektroden (Y) und mehreren, die Abtastelektroden überkreuzenden Dataelektroden (X) angebrachten, dielektrischen Schicht umfaßt, wobei die Vorrichtung folgendes aufweist:
eine Dataelektrodentreiberschaltung (10) zum Anlegen einer Modulationsspannung (V_{M}) mit einer variablen Impulsdauer entsprechend der Gradationsanzeigedaten an die Dataelektrode (X), und
eine Abtastelektrodentreiberschaltung (8) zum Anlegen einer eine Sägezahnspannung beinhaltenden Schreibspannung (V_{PW}, -V_{NW}) an die Abtastelektroden (Y) in einer sequentiellen Zeilenfolge;
**dadurch gekennzeichnet**, daß der absolute Wert der Sägezahnspannung zeitabhängig zunimmt.

4. Steuervorrichtung für ein Anzeigegerät nach Anspruch 3, wobei die zeitabhängige Veränderung der Sägezahnspannung (V_{R}) konstant ist, so daß sich die Sägezahnspannung (V_{R}) proportional zur Zeit verändert.

5. Steuervorrichtung für ein Anzeigegerät nach Anspruch 3 oder 4, wobei die Abtastelektrodenschaltung (8) folgendes aufweist:
eine Konstantspannung-Erzeugungsschaltung (20a; 20b) zum Erzeugen einer Spannung (Vₜₕ; - Vₜₕ + V_{M}), die während der Abtastperiode auf einem konstanten Pegel gehalten wird, und
eine Sägezahnspannung-Erzeugungsschaltung (21a; 21b) zum Erzeugen eines Teils der Sägezahnspannung (V_{R}), welcher zu der Konstantspannung (Vₜₕ; - Vₜₕ + V_{M}) addiert wird und während der Abtastperiode zeitabhängig zunimmt.

6. Vorrichtung nach Anspruch 5, wobei die Konstantspannung-Erzeugungsschaltung (20a) eine Schwellenspannung (Vₜₕ) für die dielektrische Schicht erzeugt.

7. Vorrichtung nach Anspruch 5, wobei die Konstantspannung-Erzeugungsschaltung (20b) die Summe aus einer Schwellenspannung (Vₜₕ) an der dielektrischen Schicht und dem Absolutwert der Modulationsspannung (V_{M}) erzeugt.

8. Steuervorrichtung für ein Anzeigegerät nach einem der Ansprüche 5, 6 oder 7, wobei die Sägezahnspannung-Erzeugungsschaltung (21a; 21b) folgendes aufweist:
einen in Serie zu den Ausgängen der Konstantspannungsquellen (20a; 20b) geschalteten Kondensator (16; 26);
einen hinter dem Kondensator (16; 26) liegenden Spannungs-Strom-Wandler (14; 24) zum Steuern des Ladestroms des Kondensators (16; 26), welcher der Eingangsspannung entspricht; und
eine Sägezahnspannungs-Steuerschaltung (7a; 7b), die den Spannungs-Strom-Wandler (14; 24) mit einer Spannung speist, die gleichmäßig zeitabhängig zunimmt.

9. Steuervorrichtung für ein Anzeigegerät nach einem der Ansprüche 3 bis 8, wobei ein Vollbild aus einem Paar von Halbbildern besteht und die an die dielektrische Schicht angelegten Spannungen bei dem einen und dem anderen Halbbild entgegengesetzte Polarität aufweisen.

## Revendications

1. Procédé de pilotage d'un dispositif d'affichage incluant une couche diélectrique intercalée entre une pluralité d'électrodes de balayage (Y) et une pluralité d'électrodes de données (X) agencées pour croiser les électrodes de balayage, comprenant les étapes d'application d'une tension de modulation (V_{M}), ayant une largeur d'impulsion variable selon des données d'affichage de gradation, à chacune des électrodes de données (X) ; et
d'application d'une tension d'écriture (V_{PW}, -V_{NW}), comprenant une tension en dent de scie (V_{R}), dans un ordre séquentiel de ligne, aux électrodes de balayage (Y) ;
caractérisé en ce que la valeur absolue de la tension en dent de scie augmente avec le temps.

2. Procédé de pilotage d'un dispositif d'affichage selon la revendication 1, dans lequel la vitesse de variation temporelle de la tension en dent de scie (V_{R}) est constante de façon que la tension en dent de scie (V_{R}) soit proportionnelle au temps.

3. Appareil de pilotage d'un dispositif d'affichage comprenant un appareil d'affichage (6) ayant une couche diélectrique intercalée entre une pluralité d'électrodes de balayage (Y) et une pluralité d'électrodes de données (X) agencées pour croiser les électrodes de balayage, ledit appareil comprenant :
un circuit de pilotage d'électrode de données (10) pour appliquer une tension de modulation (V_{M}) ayant une largeur d'impulsion variable selon les données d'affichage de gradation, à l'électrode de données (X), et
un circuit de pilotage d'électrode de balayage (8) pour appliquer une tension d'écriture (V_{PW}, -V_{NW}), comprenant une tension en dent de scie (V_{R}), aux électrodes de balayage (Y), dans un ordre séquentiel de ligne ;
caractérisé en ce que la valeur absolue de la tension en dent de scie augmente avec le temps.

4. Appareil de pilotage pour un dispositif d'affichage selon la revendication 3, dans lequel la vitesse de variation temporelle de la tension en dent de scie (V_{R}) est constante de façon que la tension en dent de scie (V_{R}) soit proportionnelle au temps.

5. Appareil de pilotage pour un dispositif d'affichage selon la revendication 3 ou 4, dans lequel le circuit de pilotage d'électrode de balayage (8) comprend :
un circuit générateur de tension constante (20a ; 20b) pour produire une tension (Vₜₕ ; -Vₜₕ + V_{M}) qui est maintenue à un niveau constant pendant la période de balayage, et un
circuit générateur de tension en dent de scie (21a ; 21b) pour produire une partie de la tension en dent de scie (V_{R}) qui est ajoutée à la tension constante (Vₜₕ ; -Vₜₕ + V_{M}) et qui augmente avec le temps pendant la période de balayage.

6. Appareil selon la revendication 5, dans lequel le circuit générateur de tension constante (20a) est agencé pour produire une tension de seuil (Vₜₕ) de la couche diélectrique.

7. Appareil selon la revendication 5, dans lequel le circuit générateur de tension constante (20b) est agencé pour produire la somme d'une tension de seuil (Vₜₕ) de la couche diélectrique et de l'amplitude de la tension de modulation (V_{M}).

8. Appareil de pilotage pour un dispositif d'affichage selon l'une quelconque des revendications 5, 6 ou 7, dans lequel le circuit générateur de tension en dent de scie (21a ; 21b) comprend :
un condensateur (16 ; 26) relié en série aux sorties des générateurs de tension constante (20a 20b),
un circuit convertisseur tension-courant (14 ; 24) relié en série au condensateur (16 ; 26) pour commander le courant de charge du condensateur (16 26) qui correspond à la tension d'entrée ; et
un circuit de commande de tension en dent de scie (7a ; 7b) pour alimenter le circuit de transformation tension-courant (14, 24) avec une tension qui augmente à une vitesse constante avec le temps.

9. Appareil de pilotage pour un dispositif d'affichage selon l'une quelconque des revendications 3 à 8, dans lequel une image complète est constituée d'une paire de trames et dans lequel les tensions appliquées à la couche diélectrique sont de polarité opposée dans une trame et dans l'autre trame.
